# EUROPÄISCHE PATENTSCHRIFT

(11) **EP 3 425 594 B1**
(45) Veröffentlichungstag und Bekanntmachung des Hinweises auf die Patenterteilung: **25.03.2026**
(21) Anmeldenummer: 18181309.8
(22) Anmeldetag: 03.07.2018
(51) Int. Cl.: G07B 17/00, G06Q 10/0834, G06Q 50/60

(54) **VERFAHREN ZUR VALIDIERUNG EINER MIT EINER VORFRANKIERUNG VERSEHENEN POSTSACHE**
METHOD FOR THE VALIDATION OF A PRE-FRANKED POSTAL ITEM
PROCÉDÉ DE VALIDATION D'UN OBJET POSTAL POURVU D'UN PRÉAFFRANCHISSEMENT

(30) Priorität: 05.07.2017 DE 102017211421
(43) Veröffentlichungstag der Anmeldung: 09.01.2019
(73) Patentinhaber: Bundesdruckerei GmbH, 10969 Berlin (DE)
(72) Erfinder: Gehlhaar, Wilhelmine, 12623 Berlin (DE); Thumann, Eva-Maria, 15711 Königs Wusterhausen (DE); Tornow, Markus, 12353 Berlin (DE); Witthuhn, Carsten, 12203 Berlin (DE); Dietrich, Frank, 12437 Berlin (DE)
(74) Vertreter: Witte, Weller und Partner Patentanwälte mbB Stuttgart

(56) Entgegenhaltungen:
- EP-A2- 0 805 422
- EP-A2- 1 221 675
- DE-A1- 102007 052 458
- DE-A1- 102008 063 010
- US-A1- 2011 137 775

## Beschreibung

### Technisches Gebiet

Die vorliegende Erfindung betrifft ein Verfahren zur Validierung einer mit einer Vorfrankierung versehenen Postsache.

### Beschreibung des Standes der Technik

Es ist bekannt, Postsachen wie Postkarten, Briefumschläge, Paketschachteln u.dgl. mit einer Vorfrankierung eines ausstellenden Postdienstleisters zu versehen, um dem Versender zu ersparen, zusätzlich zu der Postsache noch ein Frankiermittel (Briefmarke o.dgl.) erwerben zu müssen. Aus der EP 1 477 937 A2 ist ein System bekannt, bei dem eine mit zwei Identifizierern versehene Postsache zum Einsatz kommt. Ein Benutzer/Versender muss einen digitalen Stift benutzen, der selbst wiederum über einen eindeutigen Identifizierer verfügt, um einen Versendeprozess starten zu können, in dessen Ablauf die beiden Identifizierer miteinander verknüpft werden und über eine Vermittlungsstelle, die den Aussteller der Vorfrankierung zuordnet und die Gebührenentrichtung vermittelt.

Aus der DE 10 2008 063010 A1 ist ein Verfahren zum Frankieren von Postsendungen bekannt, für das eine Frankierinformation mit einem zugeordneten Aktivierungscode bereitgestellt wird.

### Zusammenfassung der Erfindung

Ausgehend hiervon wird erfindungsgemäß ein Verfahren zur Validierung einer mit einer Vorfrankierung versehenen Postsache mit den Merkmalen des Anspruchs 1 vorgeschlagen.

Der Kern der Erfindung liegt darin begründet, als Vorfrankierung einen auf der Postsache maschinenlesbar aufgebrachten verifizierbaren eindeutigen Identifizierer aufzubringen. Die Verwendung eines derartigen Identifizierers eröffnet die Möglichkeit, die Frankatur unabhängig von einem Postdienstleister auszugeben. Aufgrund der Eindeutigkeit und Verifizierbarkeit mittels einer kryptographischen Signatur ist gewährleistet, dass jeder Postdienstleister darauf vertrauen kann, dass die Identität des Versandstückes (Postsache) gegeben und nachvollziehbar, mithin eindeutig ist. Erfindungsgemäß legt sich ein Benutzer/Versender erst zum Zeitpunkt der Aufgabe der Postsache auf einen bestimmten Postdienstleister fest, der nach erfolgreicher Verifizierung die Beförderung der Postsache durchführt.

Die Handhabung seitens des Benutzers erfolgt mittels eines telekommunikationsfähigen Erfassungsgeräts, bei dem es sich bspw. um ein Mobiltelefon mit Computerfunktionalitäten (sog. Smartphone) handeln kann. Das telekommunikationsfähige Erfassungsgerät sendet den bspw. durch Scannen/Abfotografieren erfassten Identifizierer an einen Beförderungsdienstleister, der versenderseitig aus einer Mehrzahl möglicher Beförderungsdienstleister beliebig ausgewählt wurde. Der Beförderungsdienstleister verifiziert den Identifizierer und speichert ihn in einer ihm zugänglichen Datenbank ab.

Die Auswahl des Beförderungsdienstleisters durch den Versender kann vor oder nach einer Anzeige der fällig werdenden Beförderungsgebühr auf dem Erfassungsgerät erfolgen. In der erstgenannten Variante wählt der Versender den von ihm bevorzugten Beförderungsdienstleister aus einer Liste von Dienstleistern aus. Die Auswahl wird von dem Erfassungsgerät durch Anzeige der fällig werdenden Beförderungsgebühr quittiert. Der Versender bestätigt die Beförderungsgebühr, was mit einer Zahlungsverpflichtung oder einer direkten Bezahlung verbunden ist, und das Erfassungsgerät sendet den Identifizierer an den Beförderungsdienstleister. In der zweitgenannten Variante werden dem Versender neben der Liste von Beförderungsdienstleistern die den Dienstleistern zugeordneten fällig werdenden Beförderungsgebühren angezeigt und der Versender trifft seine Auswahl durch bestätigen einer Zuordnung Beförderungsdienstleister/Beförderungsgebühr, was wiederum mit einer Zahlungsverpflichtung oder einer direkten Bezahlung verbunden ist, woraufhin das Erfassungsgerät dem ausgewählten Beförderungsdienstleister den Identifizierer zusendet.

Der ausgewählte Beförderungsdienstleister kann den Identifizierer in einer nur ihm zugänglichen (proprietären) Datenbank abspeichern, so dass Überprüfungszugriffe zur Überprüfung der Korrektheit der Beförderung der aufgegebenen Postsache nur durch Mitarbeiter des ausgewählten Dienstleisters möglich sind. Alternativ können die an dem Gesamtsystem teilnehmenden Beförderungsdienstleister eine gemeinsame Datenbank unterhalten. Bspw. können übermittelte und verifizierte Identifizierer in eine sogenannte "Blockchain" eingestellt werden. Letzteres kann auch mit der Entrichtung der fällig werdenden Beförderungsgebühr mittels einer Kryptowährung kombiniert werden.

Anspruch 5 definiert den versenderseitigen Ablauf des erfindungsgemäßen Verfahrens.

Die vorliegende Erfindung deckt auch ein Computerprogramm mit den Merkmalen des Anspruchs 6 ab. Es wird sowohl das Computerprogramm selbst (Anspruch 6) als auch abgespeichert auf einem computerlesbaren Medium (Computerprogrammprodukt) (Anspruch 7) beansprucht.

Weitere Vorteile und Ausgestaltungen der Erfindung ergeben sich aus den Unteransprüchen, der Beschreibung und der beiliegenden Zeichnung.

Die Erfindung ist anhand eines Ausführungsbeispiels in der Zeichnung schematisch dargestellt und wird im folgenden unter Bezugnahme auf die Zeichnung ausführlich beschrieben.

### Kurzbeschreibung der Zeichnung

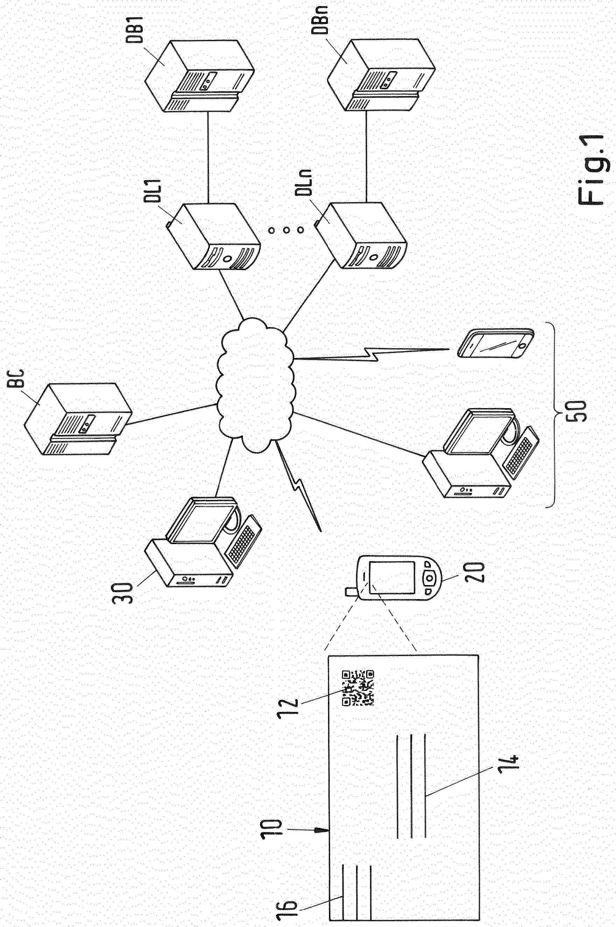

Figur 1 zeigt eine stark schematische Prinzipdarstellung eines Systems zur Durchführung eines erfindungsgemäßen Verfahrens zur Validierung einer vorfrankierten Postsache.

### Ausführliche Beschreibung

Figur 1 zeigt eine Postsache 10 (im dargestellten Ausführungsbeispiel ein Briefumschlag), die mit einer Vorfrankierung versehen ist. Bei der Vorfrankierung handelt es sich um einen maschinenlesbaren eindeutigen Identifizierer 12, der erfindungsgemäß zudem verifizierbar ist. Die Verifizierbarkeit ist durch eine kryptographische Signatur des Identifizierers 12 gegeben. Die Signatur wird von einem Aussteller/Hersteller 30 der vorfrankierten Postsache vorgenommen. Der Identifizierer 12 ist unabhängig von einem später durch den Versender auszuwählenden Beförderungsdienstleister (Postdienst). Die Maschinenlesbarkeit kann bspw. durch Umsetzen des Identifizierers in einen Strichcode oder binärkodierten Matrixcode (auch als QR-Code^{®} bzw. Secure-QR-Code^{®} bekannt) erzielt werden, wie in der Darstellung der Figur ein beispielhaft illustriert. Darüber hinaus umfasst die Postsache 10 in an sich bekannter Weise ein Anschriftenfeld 14 und ein Absenderfeld 16.

Zum Erfassen des Identifizierers 12 der vorfrankierten Postsache ist ein telekommunikationsfähiges Erfassungsgerät 20 in Form eines sogenannten Smartphones vorgesehen. Mit einer Kamera des Smartphones 20 kann der Identifizierer 12 erfasst und die mit dem Identifizierer 12 verbundene Information über einen Telekommunikationskanal versandt werden.

Mittels eines auf dem Erfassungsgerät 20 installierten Computerprogramms (App) kann ein Versender erfindungsgemäß die vorfrankierte Postsache 10 aufgeben. Hierzu wird der Identifizierer 12 durch das Erfassungsgerät 20 erfasst, indem der Identifizierer mittels einer Kamera des Erfassungsgeräts 20 aufgenommen bzw. fotografiert wird.

Das Computerprogramm bzw. die App kann manuell gestartet werden, oder der Start wird durch die Aufnahme des Identifizierers 12 automatisch ausgelöst.

Der Versender gibt daraufhin zur Gebührenrechnung notwendige Angaben/Daten ein wie bspw. Größe, Gewicht und Zielort der Sendung sowie gegebenenfalls die Versandart, Versicherung der Sendung o.dgl. Aufgrund der Vorfrankierung kann bspw. die Größe der Sendung bereits in dem Identifizierer 12 enthalten sein.

Als weiteres muss der Versender aus einer Mehrzahl von verfügbaren Beförderungsdienstleistern DL1, ..., DLn einen Beförderungsdienst auswählen. Dies kann bspw. durch Voreinstellung der App erfolgen, wenn der Versender grundsätzlich einen konkreten Beförderungsdienst bevorzugt. Alternativ werden dem Versender von dem Computerprogramm die für die zur Aufgabe anstehende Sendung in Frage kommenden Dienstleister zur Auswahl angezeigt werden. Dies kann entweder ohne oder bereits in Zusammenhang mit der für den jeweiligen Dienstleister zutreffenden Beförderungsgebühr erfolgen. In der ersten Variante wählt der Versender den Dienstleister aus und daraufhin wird ihm die Beförderungsgebühr angezeigt, in der zweiten Variante trifft der Versender die Auswahl, indem er eine Beförderungsgebühr auswählt. Die Beförderungsgebühr wird durch die (ständig aktualisierte) App des Erfassungsgeräts 20 aufgrund der Versandangaben berechnet.

Mit der Auswahl der Beförderungsgebühr entrichtet der Versender diese durch ein auf dem Erfassungsgerät hinterlegtes Bezahlverfahren (das entweder in die beschriebene App integriert oder als separate App auf dem Erfassungsgerät vorhanden sein kann).

Mit der Bezahlung der Beförderungsgebühr ist der Identifizierer 12 an den ausgewählten Beförderungsdienstleister gebunden, und die App übermittelt diese Information an den Beförderungsdienstleister, indem sie ihm den Identifizierer 12 sendet.

Der ausgewählte Dienstleister DL1, ..., DLn empfängt den Identifizierer 12 und verifiziert diesen anhand eines öffentlichen Schlüssels des Herausgebers 30 des Identifizierers. Der Herausgeber 30 veröffentlicht diesen öffentlichen Schlüssel über das Internet. Der Herausgeber 30 garantiert darüber hinaus für die Eindeutigkeit des Identifizierers 12.

Nach erfolgreicher Verifizierung durch den Dienstleister speichert dieser den Identifizierer in einer ihm zugänglichen Datenbank DB1, ..., DBn, BC ab und quittiert gegebenenfalls die Entgegennahme des Beförderungsauftrags gegenüber dem Versender.

Wie bereits voranstehend ausgeführt kann es sich bei der Datenbank DB1, ..., DBn, BC entweder um eine nur dem betreffenden Dienstleister zugängliche (proprietäre) Datenbank DB1, ..., DBn handeln. Alternativ kann es sich um eine zumindest für alle teilnehmenden Beförderungsdienstleister zugängliche Datenbank handeln. Im Rahmen einer Sendungsverfolgungsangabe kann gegebenenfalls auch ein Datenbankzugriff für den Versender eingerichtet sein. Als weitere Alternative kann der Identifizierer in eine Blockchain BC eingestellt werden, die bspw. von den teilnehmenden Beförderungsdienstleistern eingerichtet und unterhalten werden kann. In Kombination mit einer Blockchain kann auch eine Zahlungsabwicklung der Beförderungsgebühr mittels der entsprechenden Blockchain-Währung (Krypto-Währung) erfolgen.

Mit der Sendungsabwicklung betraute Zustellzentren bzw. Zusteller können mit gegebenenfalls mobilen Endgeräten 50 die Frankierung, d.h. den Identifizierer 12 lesen/einscannen und durch Rückgriff auf die Datenbank DB1, ..., DBn, BC die Gültigkeit überprüfen.

### Bezugszeichenliste

- 10: Postsache
- 12: Identifizierer
- 14: Adressfeld
- 16: Absenderfeld
- 20: Erfassungsgerät
- 30: Aussteller/Herausgeber
- 50: Zusteller/Zustellzentrum

- BC: Blockchain
- DL1 bis DLn: Beförderungsdienstleister
- DB1 bis DBn: Datenbanken

## Patentansprüche

1. Verfahren zur Validierung einer mit einer Vorfrankierung versehenen Postsache (10), bei dem ein zur Vorfrankierung auf der Postsache (10) maschinenlesbar aufgebrachter verifizierbarer eindeutiger und durch einen Hersteller (30) der Postsache (10) kryptographisch signierter Identifizierer (12) mittels eines versenderseitig handgehabten telekommunikationsfähigen Erfassungsgeräts (20) erfasst wird, und das Erfassungsgerät (20) den erfassten Identifizierer (12) an einen versenderseitig aus einer Mehrzahl möglicher Beförderungsdienstleister (DL1, **...,** DLn) beliebig ausgewählten Beförderungsdienstleister (DL1, ..., DLn) zur Verifizierung des Identifizierers (12) durch den ausgewählten Beförderungsdienstleister (DL1, ..., DLn) mittels einer Signaturprüfung anhand eines passenden öffentlichen Schlüssels und Abspeicherung des verifizierten Identifizierers (12) in einer dem ausgewählten Beförderungsdienstleister (DL1, ..., DLn) zugänglichen Datenbank (DB1, ..., DBn) sendet, bei dem das Erfassungsgerät (20) dazu ausgelegt ist, mindestens eine mögliche Beförderungsgebühr zu berechnen und anzuzeigen, und bei dem durch ein versenderseitiges Bestätigen einer angezeigten Beförderungsgebühr eine Verknüpfung des Identifizierers (12) mit dem ausgewählten Beförderungsdienstleister (DL1, ..., DLn) vorgenommen wird.

2. Verfahren nach Anspruch 1, bei dem die Beförderungsgebühr auf der Grundlage spezifischer Beförderungsdaten für mindestens einen der Mehrzahl möglicher Beförderungsdienstleister (DL1, ..., DLn) erfolgt.

3. Verfahren nach Anspruch 1 oder 2, bei dem ein Versender die Auswahl des Beförderungsdienstleisters aus der Mehrzahl möglicher Beförderungsdienstleister (DL1, ..., DLn) vor dem Berechnen der Beförderungsgebühr oder nach dem Berechnen der Beförderungsgebühr vornimmt.

4. Verfahren nach einem der Ansprüche 1 bis 3, bei dem das Zusenden des Identifizierers (12) an den ausgewählten Beförderungsdienstleister (DL1, ..., DLn) durch ein versenderseitiges Bestätigen einer angezeigten Beförderungsgebühr ausgelöst wird.

5. Verfahren zur Validierung einer mit einer Vorfrankierung versehenen Postsache (10) durch einen Versender mit den folgenden Schritten:
- Bereitstellen einer Postsache (10) mit einem maschinenlesbar aufgebrachten, verifizierbaren, eindeutigen und durch einen Hersteller (30) der Postsache (10) kryptographisch signierten Identifizierer (12),
- Erfassen des Identifizierers (12) der Postsache (10) mittels eines telekommunikationsfähigen Erfassungsgeräts (20),
- Anzeigen einer Mehrzahl möglicher Beförderungsdienstleister (DL1, ..., DLn) auf dem Erfassungsgerät (20) und Anzeigen mindestens einer fällig werdenden Beförderungsgebühr,
- Auswählen eines Beförderungsdienstleisters (DL1, ..., DLn) und Bestätigen einer angezeigten Beförderungsgebühr durch den Versender, wobei eine Verknüpfung des Identifizierers (12) mit dem ausgewählten Beförderungsdienstleister (DL1, ..., DLn) vorgenommen wird,
- Zusenden des erfassten Identifizierers (12) an den ausgewählten Beförderungsdienstleister (DL1, ..., DLn),
- Empfangen einer Quittierung einer Entgegennahme eines Beförderungsauftrags nach erfolgreicher Verifizierung des Identifizierers durch den ausgewählten Beförderungsdienstleister (DL1, ..., DLn) mittels einer Signaturprüfung anhand eines passenden öffentlichen Schlüssels.

6. Computerprogramm mit Programmcodemitteln, die dazu ausgelegt sind, bei Ausführung des Computerprogramms auf einem telekommunikationsfähigen Erfassungsgerät (20) ein Verfahren zur Validierung einer mit einer Vorfrankierung versehenen Postsache (10) durch einen Versender mit den folgenden Schritten durchzuführen:
- Erfassen eines Identifizierers (12) auf einer bereitgestellten Postsache (10) mittels des telekommunikationsfähigen Erfassungsgeräts (20), wobei der Identifizierer (12) ein maschinenlesbar aufgebrachter, verifizierbarer, eindeutiger und durch einen Hersteller (30) der Postsache (10) kryptographisch signierter Identifizierer (12) ist,
- Anzeigen einer Mehrzahl möglicher Beförderungsdienstleister (DL1, ..., DLn) auf dem Erfassungsgerät (20) und Anzeigen mindestens einer fällig werdenden Beförderungsgebühr,
- Entgegennahme einer Auswahl eines Beförderungsdienstleisters (DL1, ..., DLn) und einer Bestätigung einer angezeigten Beförderungsgebühr durch den Versender, wobei eine Verknüpfung des Identifizierers (12) mit dem ausgewählten Beförderungsdienstleister (DL1, ..., DLn) vorgenommen wird,
- Zusenden des erfassten Identifizierers (12) an den ausgewählten Beförderungsdienstleister (DL1, ..., DLn),
- Empfangen einer Quittierung einer Entgegennahme eines Beförderungsauftrags nach erfolgreicher Verifizierung des Identifizierers durch den ausgewählten Beförderungsdienstleister (DL1, ..., DLn) mittels einer Signaturprüfung anhand eines passenden öffentlichen Schlüssels.

7. Computerprogramm nach Anspruch 6, das auf einem computerlesbaren Datenträger gespeichert ist.

## Claims

1. Method for validating a pre-franked postal item (10), wherein a unique, verifiable identifier (12), which is applied in a machine-readable manner for pre-franking of the postal item (10) and cryptographically signed by a manufacturer (30) of the postal item (10), is detected by means of a telecommunications-enabled detecting device (20) which is operated by the sender, and the detecting device (20) sends the detected identifier (12) to a transport service provider (DL1, ..., DLn), which is arbitrarily selected by the sender from a plurality of possible transport service providers (DL1, ..., DLn), for verification of the identifier (12) by the selected transport service provider (DL1, ..., DLn) by means of signature verification using a suitable public key and for storage of the verified identifier (12) in a database (DB1, ..., DBn) accessible to the selected transport service provider (DL1, ..., DLn), wherein the detecting device (20) is designed to calculate and display at least one possible transport fee, and wherein a link between the identifier (12) and the selected transport service provider (DL1, ..., DLn) is made by a confirmation of a displayed transport fee by the sender.

2. Method according to claim 1, wherein the transport fee is based on specific transport data for at least one of the plurality of possible transport service providers (DL1, ..., DLn).

3. Method according to claim 1 or 2, wherein a sender selects the transport service provider from the plurality of possible transport service providers (DL1, ..., DLn) before the transport fee is calculated or after the transport fee is calculated.

4. Method according to any of claims 1 to 3, wherein the sending of the identifier (12) to the selected transport service provider (DL1, ..., DLn) is triggered by a confirmation of a displayed transport fee by the sender.

5. Method for validating a postal item (10) pre-franked by a sender, comprising the following steps:
- providing a postal item (10) with a unique, verifiable identifier (12) which is applied in a machine-readable manner and cryptographically signed by a manufacturer (30) of the postal item (10),
- detecting the identifier (12) of the postal item (10) by means of a telecommunications-enabled detecting device (20),
- displaying a plurality of possible transport service providers (DL1, ..., DLn) on the detecting device (20) and displaying at least one transport fee that is due,
- the sender selecting a transport service provider (DL1, ..., DLn) and confirming a displayed transport fee, wherein a link is made between the identifier (12) and the selected transport service provider (DL1, ..., DLn),
- sending the detected identifier (12) to the selected transport service provider (DL1, ..., DLn),
- receiving an acknowledgment of acceptance of a transport order after successful verification of the identifier by the selected transport service provider (DL1, ..., DLn) by means of signature verification using a suitable public key.

6. Computer program comprising program code means designed to carry out, when the computer program is executed on a telecommunications-enabled detecting device (20), a method for validating a postal item (10) pre-franked by a sender, the method comprising the following steps:
- detecting an identifier (12) on a provided postal item (10) by means of the telecommunications-enabled detecting device (20), wherein the identifier (12) is a unique, verifiable identifier (12) which is applied in a machine-readable manner and cryptographically signed by a manufacturer (30) of the postal item (10),
- displaying a plurality of possible transport service providers (DL1, ..., DLn) on the detecting device (20) and displaying at least one transport fee that is due,
- accepting a selection of a transport service provider (DL1, ..., DLn) and the sender confirming a displayed transport fee, wherein a link is made between the identifier (12) and the selected transport service provider (DL1, ..., DLn),
- sending the detected identifier (12) to the selected transport service provider (DL1, ..., DLn),
- receiving an acknowledgment of acceptance of a transport order after successful verification of the identifier by the selected transport service provider (DL1, ..., DLn) by means of signature verification using a suitable public key.

7. Computer program according to claim 6, which is stored on a computer-readable data carrier.

## Revendications

1. Procédé de validation d'un objet postal (10) pourvu d'un pré-affranchissement, dans lequel un identifiant (12), appliqué de manière lisible par machine sur l'objet postal (10) à des fins de pré-affranchissement, vérifiable, univoque et signé cryptographiquement par un fabricant (30) de l'objet postal (10), est enregistré au moyen d'un appareil d'enregistrement (20) compatible avec les télécommunications et utilisé manuellement côté expéditeur, et l'appareil d'enregistrement (20) envoie l'identifiant (12) enregistré à un prestataire de services de transport (DL1, ..., DLn) sélectionné librement côté expéditeur parmi une pluralité de prestataires de services de transport (DL1, ..., DLn) possibles à des fins de vérification de l'identifiant (12), par le prestataire de services de transport (DL1, ..., DLn) sélectionné, au moyen d'un contrôle de signature à l'aide d'une clé publique appropriée, et à des fins de sauvegarde de l'identifiant (12) vérifié, dans une base de données accessible au prestataire de services de transport (DL1, ..., DLn) sélectionné, dans lequel l'appareil d'enregistrement (20) est conçu pour calculer et afficher au moins un tarif de transport possible, et dans lequel, par la confirmation côté expéditeur d'un tarif de transport affiché, un lien entre l'identifiant (12) et le prestataire de services de transport (DL1, ..., DLn) sélectionné est établi.

2. Procédé selon la revendication 1, dans lequel le tarif de transport s'effectue sur la base de données de transport spécifiques pour l'un au moins de la pluralité de prestataires de services de transport (DL1, ..., DLn) possibles.

3. Procédé selon la revendication 1 ou 2, dans lequel un expéditeur entreprend la sélection du prestataire de services de transport parmi la pluralité de prestataires de services de transport (DL1, ..., DLn) possibles avant le calcul du tarif de transport ou après le calcul du tarif de transport.

4. Procédé selon l'une des revendications 1 à 3, dans lequel l'envoi de l'identifiant (12) au prestataire de services de transport (DL1, ..., DLn) sélectionné est déclenché par une confirmation côté expéditeur d'un tarif de transport affiché.

5. Procédé de validation, par un expéditeur, d'un objet postal (10) pourvu d'un pré-affranchissement, comprenant les étapes suivantes :
- fournir un objet postal (10) comprenant un identifiant (12) appliqué de manière lisible par machine, vérifiable, univoque et signé cryptographiquement par un fabricant (30) de l'objet postal (10),
- enregistrer l'identifiant (12) de l'objet postal (10) au moyen d'un appareil d'enregistrement (20) compatible avec les télécommunications,
- afficher une pluralité de prestataires de services de transport (DL1, ..., DLn) possibles sur l'appareil d'enregistrement (20) et afficher au moins un tarif de transport exigible,
- sélectionner un prestataire de services de transport (DL1, ..., DLn) et confirmer un tarif de transport affiché par l'expéditeur, dans lequel un lien entre l'identifiant (12) et le prestataire de services de transport (DL1, ..., DLn) sélectionné est établi,
- envoyer l'identifiant (12) enregistré au prestataire de services de transport (DL1, ..., DLn) sélectionné,
- recevoir un accusé de réception d'un ordre de transport après vérification réussie de l'identifiant par le prestataire de services de transport (DL1, ..., DLn) sélectionné, au moyen d'un contrôle de signature à l'aide d'une clé publique appropriée.

6. Programme d'ordinateur comprenant des moyens de codage de programme conçus pour, lors de l'exécution du programme d'ordinateur sur un appareil d'enregistrement (20) compatible avec les télécommunications, exécuter un procédé de validation, par un expéditeur, d'un objet postal (10) pourvu d'un pré-affranchissement, comprenant les étapes suivantes :
- enregistrer un identifiant (12) sur un objet postal (10) fourni, au moyen de l'appareil d'enregistrement (20) compatible avec les télécommunications, l'identifiant (12) étant un identifiant (12) appliqué de manière lisible par machine, vérifiable, univoque et signé cryptographiquement par un fabricant (30) de l'objet postal (10),
- afficher une pluralité de prestataires de services de transport (DL1, ..., DLn) possibles sur l'appareil d'enregistrement (20) et afficher au moins un tarif de transport exigible,
- recevoir une sélection d'un prestataire de services de transport (DL1, ..., DLn) et une confirmation d'un tarif de transport affiché par l'expéditeur, dans lequel un lien entre l'identifiant (12) et le prestataire de services de transport (DL1, ..., DLn) sélectionné est établi,
- envoyer l'identifiant (12) enregistré au prestataire de services de transport (DL1, ..., DLn) sélectionné,
- recevoir un accusé de réception d'un ordre de transport après vérification réussie de l'identifiant par le prestataire de services de transport (DL1, ..., DLn) sélectionné, au moyen d'un contrôle de signature à l'aide d'une clé publique appropriée.

7. Programme d'ordinateur selon la revendication 6, qui est sauvegardé sur un support de données lisible par ordinateur.
